# EUROPEAN PATENT APPLICATION

(11) **EP 4 398 494 A1**
(43) Date of publication of application: **10.07.2024**
(21) Application number: 23202865.4
(22) Date of filing: 11.10.2023
(51) Int. Cl.: H04B 7/06, G06N 3/044, H04B 7/08, H04B 17/373

(54) **PREDICTING DURATIONS FOR BEAMS**

(30) Priority: 09.01.2023 FI 20235024
(71) Applicant: Nokia Technologies Oy, 02610 Espoo (FI)
(72) Inventor: SANGUANPUAK, Tachporn, Oulu (FI); KOSKELA, Timo, Oulu (FI)
(74) Representative: Nokia EPO representatives

(57) **Abstract**

A method performed by a user equipment can include predicting, for at least one beam received from an uplink node, at least one duration for which a channel quality will satisfy a quality threshold; and reporting the at least one duration to the uplink node.

## Description

### TECHNICAL FIELD

This description relates to wireless networking.

### BACKGROUND

User equipments can communicate with uplink nodes, such as base stations, via multiple beams. With multiple user equipments, the multiple beams can create a large amount of overhead, creating undesirable latency in the wireless network.

### SUMMARY

To reduce overhead in the wireless network, a user equipment can predict which beams will satisfy a quality threshold, and the durations for which the beams will satisfy the quality threshold. The user equipment can report the durations to an uplink node, such as a base station. The predictions of satisfactions of quality thresholds and durations for beams can be based on previously-measured channel qualities of the beams, previous accelerometer measurements of the user equipment, previous orientation measurements of the user equipment, locations of the user equipment, and/or an antenna configuration of the user equipment. The predictions can be performed by a neural network, such as a recurrent neural network, implemented by the user equipment.

A method performed by a user equipment can include predicting, for at least one beam received from an uplink node, at least one duration for which a channel quality will satisfy a quality threshold; and reporting the at least one duration to the uplink node.

A non-transitory computer-readable storage medium comprising instructions stored thereon. When executed by at least one processor, the instructions can be configured to cause a user equipment to predict, for at least one beam received from an uplink node, at least one duration for which a channel quality will satisfy a quality threshold and report the at least one duration to the uplink node.

A user equipment can include at least one processor; and a non-transitory computer-readable storage medium comprising instructions stored thereon. When executed by the at least one processor, the instructions can be configured to cause the user equipment to predict, for at least one beam received from an uplink node, at least one duration for which a channel quality will satisfy a quality threshold and report the at least one duration to the uplink node.

A user equipment can include means for predicting, for at least one beam received from an uplink node, at least one duration for which a channel quality will satisfy a quality threshold, and means for reporting the at least one duration to the uplink node.

A method performed by an uplink node can include predicting, based on an initial location of a user equipment and previous channel quality measurements, a first duration that a quality of a first selected beam will satisfy a quality threshold; determining that the first duration will not satisfy a threshold time duration; predicting, based on a subsequent location of the user equipment, the previous channel quality measurements, and additional channel quality measurements, a second duration that a quality of a second selected beam will satisfy the quality threshold; determining that the second duration does satisfy the threshold time duration; and transmitting data to the user equipment via the second beam during the predicted second duration.

A non-transitory computer-readable storage medium comprising instructions stored thereon. When executed by at least one processor, the instructions can be configured to cause an uplink node to predict, based on an initial location of a user equipment and previous channel quality measurements, a first duration that a quality of a first selected beam will satisfy a quality threshold; determine that the first duration will not satisfy a threshold time duration; predict, based on a subsequent location of the user equipment, the previous channel quality measurements, and additional channel quality measurements, a second duration that a quality of a second selected beam will satisfy the quality threshold; determine that the second duration does satisfy the threshold time duration; and transmit data to the user equipment via the second beam during the predicted second duration.

An uplink node can include at least one processor; and a non-transitory computer-readable storage medium comprising instructions stored thereon. When executed by the at least one processor, the instructions can be configured to cause the uplink node to predict, based on an initial location of a user equipment and previous channel quality measurements, a first duration that a quality of a first selected beam will satisfy a quality threshold; determine that the first duration will not satisfy a threshold time duration; predict, based on a subsequent location of the user equipment, the previous channel quality measurements, and additional channel quality measurements, a second duration that a quality of a second selected beam will satisfy the quality threshold; determine that the second duration does satisfy the threshold time duration; and transmit data to the user equipment via the second beam during the predicted second duration.

An uplink node can include means for predicting, based on an initial location of a user equipment and previous channel quality measurements, a first duration that a quality of a first selected beam will satisfy a quality threshold; means for determining that the first duration will not satisfy a threshold time duration; means for predicting, based on a subsequent location of the user equipment, the previous channel quality measurements, and additional channel quality measurements, a second duration that a quality of a second selected beam will satisfy the quality threshold; means for determining that the second duration does satisfy the threshold time duration; and means for transmitting data to the user equipment via the second beam during the predicted second duration.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram of a wireless network 130 according to an example embodiment.
FIG. 2 is a diagram illustrating gNB beams and LTE beams.
FIG. 3A is a timing diagram showing functions performed by, and messages exchanged between, a user equipment and an uplink node.
FIG. 3B is a timing diagram showing functions performed by, and messages exchanged between, the user equipment and the uplink node.
FIG. 4 shows beam prediction at a user equipment.
FIG. 5 shows beam prediction at an uplink node based on a measurement report received from the user equipment according to an example.
FIG. 6 is a block diagram of a wireless station or node.
FIG. 7 is a flowchart showing a method performed by the user equipment.
FIG. 8 is a flowchart showing a method performed by an uplink node.

Like reference numbers refer to like elements.

### DETAILED DESCRIPTION

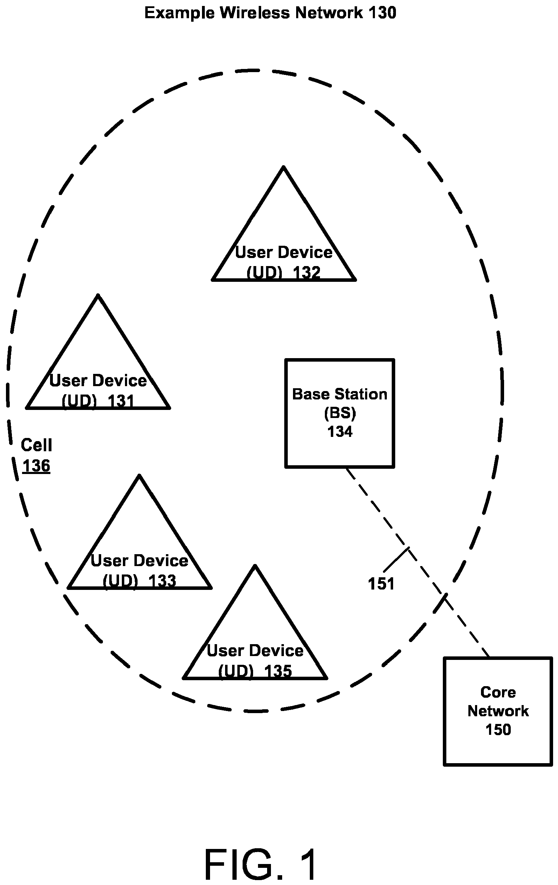

FIG. 1 is a block diagram of a wireless network 130 according to an example embodiment. In the wireless network 130 of FIG. 1, user devices 131, 132, 133 and 135, which may also be referred to as mobile stations (MSs) or user equipments (LTEs), may be connected (and in communication) with a base station (BS) 134, which may also be referred to as an access point (AP), an enhanced/evolved Node B (eNB), a gNB, an uplink node, or a network node. The terms user device and user equipment (LTE) may be used interchangeably. Base station, access point, enhanced Node B, gNB, and network node are examples of uplink nodes that communicate with user equipments from an uplink direction. A base station also include or may be referred to as a RAN (radio access network) node, and may include a portion of a base station or a portion of a RAN node (e.g., such as a centralized unit (CU) and/or a distributed unit (DU) in the case of a split base station or split gNB). At least part of the functionalities of a base station (e.g., access point (AP), base station (BS) or (e)Node B (eNB), gNB, RAN node) may also be carried out by any uplink node, server or host which may be operably coupled to a transceiver, such as a remote radio head. Base station (or AP) 134 provides wireless coverage within a cell 136, including to user devices (or LTEs) 131, 132, 133 and 135. Although only four user devices (or LTEs) are shown as being connected or attached to base station 134, any number of user devices may be provided. Base station 134 is also connected to a core network 150 via a S1 interface 151. This is merely one simple example of a wireless network, and others may be used.

A base station (e.g., such as BS 134) is an example of a radio access network (RAN) node within a wireless network. A base station (or a RAN node) may be or may include (or may alternatively be referred to as), e.g., an access point (AP), a gNB, an eNB, or portion thereof (such as a /centralized unit (CU) and/or a distributed unit (DU) in the case of a split BS or split gNB), or other network node.

According to an illustrative example, a base station node (e.g., BS, eNB, gNB, CU/DU, ...) or a radio access network (RAN) may be part of a mobile telecommunication system. A RAN (radio access network) may include one or more base stations or RAN nodes that implement a radio access technology, e.g., to allow one or more user equipments to have access to a network or core network. Thus, for example, the RAN (RAN nodes, such as base stations or gNBs) may reside between one or more user devices or user equipments and a core network. According to an example embodiment, each RAN node (e.g., BS, eNB, gNB, CU/DU, ...) or base station may provide one or more wireless communication services for one or more user equipments or user devices, e.g., to allow the user equipments to have wireless access to a network, via the RAN node. Each RAN node or base station may perform or provide wireless communication services, e.g., such as allowing user equipments or user devices to establish a wireless connection to the RAN node, and sending data to and/or receiving data from one or more of the user equipments. For example, after establishing a connection to a user equipment, a RAN node or network node (e.g., BS, eNB, gNB, CU/DU, ...) may forward data to the user equipment that is received from a network or the core network, and/or forward data received from the user equipment to the network or core network.

RAN nodes or network nodes (e.g., BS, eNB, gNB, CU/DU, ...) may perform a wide variety of other wireless functions or services, e.g., such as broadcasting control information (e.g., such as system information or on-demand system information) to user equipments, paging user equipments when there is data to be delivered to the user equipment, assisting in handover of a user equipment between cells, scheduling of resources for uplink data transmission from the user equipment(s) and downlink data transmission to user equipment(s), sending control information to configure one or more user equipments, and the like. These are a few examples of one or more functions that a RAN node or base station may perform.

A user device or user node (user terminal, user equipment (LTE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink-only device, of which an example is a camera or video camera loading images or video clips to a network. Also, a user node may include a user equipment (LTE), a user device, a user terminal, a mobile terminal, a mobile station, a mobile node, a subscriber device, a subscriber node, a subscriber terminal, or other user node. For example, a user node may be used for wireless communications with one or more network nodes (e.g., gNB, eNB, BS, AP, CU, DU, CU/DU) and/or with one or more other user nodes, regardless of the technology or radio access technology (RAT). In LTE (as an illustrative example), core network 150 may be referred to as Evolved Packet Core (EPC), which may include a mobility management entity (MME) which may handle or assist with mobility/handover of user devices between base stations, one or more gateways that may forward data and control signals between the base stations and packet data networks or the Internet, and other control functions or blocks. Other types of wireless networks, such as 5G (which may be referred to as New Radio (NR)) may also include a core network.

In addition, the techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

The techniques described herein may be applied to a wide variety of wireless technologies or wireless networks, such as 5G (New Radio (NR)), cmWave, and/or mmWave band networks, IoT, MTC, eMTC, eMBB, URLLC, 6G, etc., or any other wireless network or wireless technology. These example networks, technologies or data service types are provided only as illustrative examples.

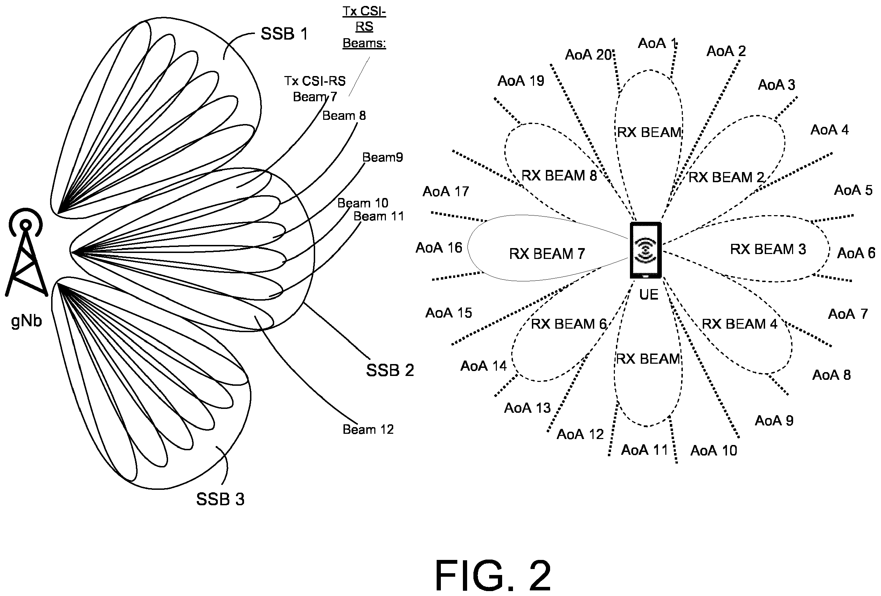

FIG. 2 is a diagram illustrating gNB beams and UE beams. Beamforming may be used for transmitting and/or receiving a signal. By adjusting a weight (e.g., amplitude and/or phase) of each antenna element of an antenna panel or antenna system, a node (e.g., network node and/or LTE) may provide directivity in which transmission power may be directed in a specific direction via beamforming, for transmitting a signal. Thus, beamforming may allow a node to provide transmitter-side directivity, where a transmitting node (e.g., a gNB or network node, or a UE or user device) may apply a weight or a set of weights to antenna elements to form a beam for transmitting a signal. Likewise, beamforming may also be used to provide receiver-side directivity, where a receiving node may apply a weight or set of weights to antenna elements to form a receive beam. Because each beam may typically cover only a limited area or direction, multiple beams (e.g., with each beam pointed in a different direction) may be required to cover a full range of directions. Example beams (i.e. the beam is used to transmit a specific downlink reference signal by the network, thus the beam may be identified by the downlink reference signal) may include synchronization signal block reference signal (SSB) beams, and channel state information reference signal (CSI-RS) beams, where each reference signal is associated with a different beam, as it may point in a different direction. Each beam may be identified based on a beam or reference signal identifier. An uplink node such as a gNB or network node may utilize multiple beams to cover the entire service area, and one or a subset of those beams may be associated with a user equipment (e.g., may point in a direction towards the user equipment and/or may be a strongest beam (or best beam, such as the beam having a highest RSRP measurement) for communication with the user equipments).

Wide beams may be wider (have a wider or larger angle, to cover a larger range of angular directions) than narrow beams. Wide beams may include, e.g., SSB beams or CSI-RS beams, while narrow beams may typically include CSI-RS beams. In some examples, the CSI-RS beams may have the same spatial coverage as the SSB beams.

3GPP beam management may include procedures P1, P2 and P3 that are briefly summarized as follows:
P1 (gNB wide beam sweeping): The gNB sweeps through a set of wide angular beams assigned to different SSB/CSI-RS resources, while transmitting a signal (e.g., a SSB or a CSI-RS signal) on an associated resource of each beam. Sweeping may refer to the node generating a sequence of beams across a range of directions or possibly covering all directions. After the LTE performs signal measurement (e.g., the UE measuring reference signal receive power (RSRP)) on different SSBs (or for different SSB beams), the LTE requests access to the gNB, by transmitting (e.g., by transmitting a random access preamble) in a time-frequency location that corresponds to the SSB of the best beam.

P2 (gNB narrow beam sweeping): The gNB performs beam sweeping through a set of narrow beams assigned to different CSI-RS resources that cover the wide angular space of the SSB beam adopted (or indicated by the LTE as the best wide beam) in P1. The LTE performs signal measurement (e.g., measures RSRP of signals transmitted by gNB via the narrow beams) and reports to the gNB the RSRP measurements of one or more of the best or strongest gNB (or network node) transmit narrow beams using a CSI-report. The gNB may select the best gNB transmit narrow beam based on the RSRP measurements.

P3 (LTE beam sweeping): the gNB uses the optimal or best gNB transmit narrow beam selected from P2 to transmit multiple CSI-RSs (multiple narrow or CSI-RS beams) while the UE sweeps through a set of LTE receive narrow beams to refine the LTE beam direction. The LTE can make a selection of the best LTE receive narrow beam based on the RSRP measurements and communicate the results to gNB.

Therefore, during data transmission the gNB (or network node) uses the best or strongest (e.g., a beam or reference signal having a highest RSRP) narrow beam found in P2 while the user equipment uses the best or strongest (e.g., beam or reference signal having a highest RSRP) beam found in P3.

The three procedures (P1, P2 and P3) are inefficient for two main reasons. On the one hand, sweeping all the beams in each of P1, P2 and P3 is time-consuming. This significantly increases the system's latency during the initial access operation. Secondly, the above procedures significantly increase measurement reporting, which increases signaling overhead. This reduces the system throughput and spectral efficiency. For example, data transmission opportunities may be reduced due to the resources employed for signaling and obtaining the beam measurements.

As shown in FIG. 2, a fixed receive beam may be used or assumed during P2 to identify the best gNB transmit narrow beam in the training phase. Then, during P3, the gNB may transmit on a fixed transmit (Tx) narrow beam while the UE sweeps the receive beam measuring the RSRP of all the receive beams (*M_{RX}*) and estimating the AoA for each one. As shown in FIG. 2, at the left side is the gNB codebook with N=3 SSB beams (broad beams) and 6 CSI-RS beams for each SSB beam. At the right-side, the LTE codebook and AoA estimation are shown with the fixed beam pointing in the direction of Rx beam 7.

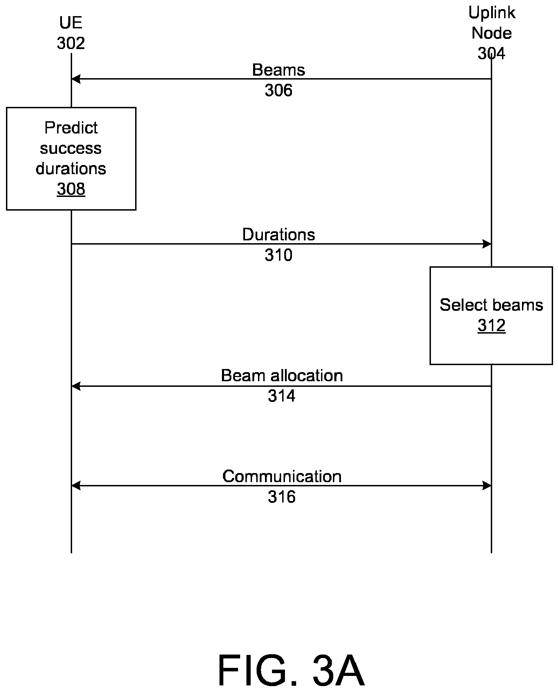

FIG. 3A is a timing diagram showing functions performed by, and messages exchanged between, a user equipment 302 and an uplink node 304. The user equipment 302 can include any of the user devices 131, 132, 133, 135 described above. The uplink node 304 can include the base station 134 or any upstream component of the core network 150 described above.

The uplink node 304 can send multiple beams 306 to the user equipment 302. The beams 306 can include one beam, at least one beam, and/or multiple beams. The user equipment 302 can receive the multiple beams 306 from the uplink node 304. The beams 306 can include control beams, such as physical downlink control channel (PDCCH) beams or physical uplink control channel (PUCCH) beams (i..e the network beam used for reception of uplink control transmission by the LTE), and/or data channel beams, such as physical downlink shared channel (PDSCH) or physical uplink shared channel (PUSCH) beams (i..e the network beam used for reception of uplink datatransmission by the LTE). In some examples, the beams 306 can include a set of beams configured by the uplink node 304. In some examples, the beams 306 can include at least one beam associated with downlink control channel reception for the user equipment 302. In some examples, the beams 306 can include at least one beam associated with downlink data channel reception for the user equipment 302. In some examples, the beams 306 can include at least one beam associated with uplink control channel transmission by the user equipment 302. In some examples, the beams 306 can include at least one beam associated with uplink data channel transmission by the user equipment 302.

The user equipment 302 can predict success durations (308) of the future beams. The user equipment 302 can predict the success durations (608) by predicting channel qualities for future beams that correspond to the beams 306. In some examples, the user equipment 302 can predict the channel quality by a neural network, such as a long short-term memory (LSTM) recurrent neural network implemented by the user equipment 302. In some examples, the channel quality can include reference signal received power (RSRP) within the beam. In some examples, the channel quality can include a signal-to-interference-and-noise ratio (SINR) within the beam. In some examples, the user equipment 302 can predict the success duration(s) (308) of the beam(s) based on information received from the uplink node 304, such as a prediction request from the uplink node 304 requesting the user equipment 302 to predict and report success durations to the uplink node 304.

In some examples, the success duration(s) can be predicted by a neural network, such as a long short-term memory (LSTM) recurrent neural network, implemented by the user equipment 302. In some examples, the success duration(s) can be implemented by a communication network such as the wireless network 130 and/or core network 150, that includes the uplink node 304 such as the base station 134.

In some examples, the user equipment 302 can (be configured to) predict the success duration(s) (308) at periodic intervals, such as every millisecond or every second or every 10 seconds or longer, depending on how the uplink node 304 (network) configures the prediction interval at the user equipment 302. In some examples, the user equipment 302 can predict the success duration(s) (308) in response to at least one new measurement performed by the user equipment 302, such as a measurement of the channel quality of at least one beam, an accelerometer measurement by the user equipment 302, and/or an orientation measurement by the user equipment 302, as non-limiting examples. In some examples, LTE may be configured to perform at least one prediction based on the measurement period e.g. every measurement period UE may be configured to perform at least one prediction. In some examples, UE may be configured to perform at least one prediction based on the reporting period e.g. every reporting period UE may be configured to perform at least one prediction (which may be reported). In some examples, the user equipment 302 can predict the success duration(s) at intervals related to the predicted durations, such as at longer intervals if the predicted durations are longer and at shorter intervals if the predicted durations are shorter.

The user equipment 302 can determine how long (durations) the channel qualities will meet a channel quality threshold. In some examples, the user equipment 302 can predict the success durations (308) based on a sequence of previously-measured channel qualities of the beams 306. In some examples, the user equipment 302 can predict the success durations (308) based on a sequence of previous accelerometer measurements of the user equipment 302. In some examples, the user equipment 302 can predict the success durations (308) based on a sequence of previous orientation measurements of the user equipment 302. In some examples, the user equipment 302 can predict the success durations (308) based on a sequence of determined locations of the user equipment 302. In some examples, the user equipment 302 can predict the success durations (308) based on an antenna configuration of the user equipment 302. Antenna configuration of the LTE may comprise of one or more antenna panels (having one or more antennas) that is capable of forming one or beams. As an example the antenna configuration may refer to the one or more beams that the LTE is capable of forming. In some examples, the each beam the LTE can form, may be further identified by an identifier. In some examples the LTE may be able/or may be configured (e.g. by network)/assumed/expected to form N beams (for TX and/or RX) and each beam be identified using and identifier. This identifier may be used e.g. in an input for the predictor (either at gNB or LTE side). The UE beam identifier may be used in the beam report (e.g. success duration reports or measurement reports to associated specific channel quality value that is reported with a LTE beam identifier).

In some examples, the durations and/or success durations can be times, which can be measured in slots or units of time such as milliseconds, that the user equipment 302 predicts a reference signal index for a given beam to be above a quality threshold. An example of a quality threshold is reference signal received power (RSRP). In some examples, a quality threshold can be a fixed threshold, such as a detection threshold (i.e. the minimum RSRP threshold that the reference signal can be considered to be detected) or another value indicating a quality of a channel. In some examples, the quality threshold can be a channel quality indicator (CQI) value. In some examples, the CQI value can map a signal-to-interference-and-noise ratio (SINR) to a specific modulation and coding scheme. In some examples, the CQI value can be derived based on an estimated RSRP value and a fixed value for an interference component or a network-configured estimate for the interference component within the wireless network 130.

In some examples, the duration can be a time during which the user equipment 302 predicts the channel quality, which can be estimated as RSRP, CQI, or SINR, to be above the channel quality threshold (or within a relative value of x dBs, which can be positive and/or negative relative value) for at least a predetermined proportion, such as ninety percent (90%), or for the entire duration. In some examples, the duration can be predicted and/or reported as a multiple of reference signal periodicities and/or reporting periodicities.

In some examples, the duration can be a number of consecutive duration periods (e.g. Period_dur) for which the user equipment 302 predicts the channel quality, such as the RSRP, to be above the quality threshold, and/or for which the user equipment 302 predicts the channel quality to be above the channel quality threshold for at least a predetermined proportion of time. In some examples, the user equipment 302 can report durations 310 as multiples of the duration periods (e.g. Period_dur) along with an index identifying the beam. As an example a *Period dur* may be expressed in milliseconds/seconds or in some predifned time units such as slots or frames associated with the system.

In some examples, the duration can be a time during which the user equipment 302 predicts that a signal strength and/or power level within the beam, such as the RSRP, will be within a predetermined range, such as a decibel (dB) range of a predetermined or measured signal strength and/or power level. In some examples, the user equipment 302 can predict a duration, such as in slots or time durations (such as milliseconds/seconds), that a beam index (a downlink beam index / downlink reference signal identifier) will stay within the range of the value being predicted. In some examples, the user equipment can predict the value and provide the value in a report with granularity of a predetermined number of bits, such as K-bit granularity. In an example, each of the k-bit values can be mapped to a specific duration value (specified, or configured by the network e.g. using RRC).

In some examples, the user equipment 302 can predict and/or report the durations per antenna panel of the user equipment. In some examples, the user equipment can predict and/or report the durations across all antenna panels of the user equipment 302. In some examples, the reports of the durations 310 can include identifiers of the antenna panels as well as identifiers of the beams and the durations. In some examples UE may have only one antenna panel i.e. it may be considered to have omnidirectional antenna, or in other words, it may not use beamforming (thus the LTE RX/TX beam index may have only one value as in Fig. 2. In some cases UE may use RX diversity (i..e use one or more receivers with spatially separated (omnidirectional or omni like/dipole) antennas in a device.

In some examples, the user equipment 302 can predict separate durations for control beams and data channel beams. Control beams can include physical downlink control channels (PDCCH) and/or physical uplink control channels (PUCCH). Data channel beams can include physical downlink shared channels (PDSCH) and/or physical uplink shared channels (PUSC). In some examples, the channel quality threshold and/or quality threshold can be lower for control beams, but the duration threshold can be longer, where longer duration is preferable and lower quality is tolerated for control beams. In some examples, the channel quality threshold and/or quality threshold can be higher for data channel beams, but the duration threshold can be shorter, where higher quality is preferable and a shorter duration is tolerated. These configurations may be used as different reporting modes or different ways to report prediction information by the LTE to network. Alternatively, the network may predict (based on reported LTE measurements) and utilize the different threshold levels for configuring data and control beams. In some examples, the user equipment 302 can predict and/or report durations for (candidate) control beams with control beam-specific thresholds for duration and quality (e.g. duration and/or quality above a threshold). In some examples, the user equipment can predict and/or report durations for (candidate) data beams with data beam-specific thresholds for duration and quality (e.g. duration and/or quality above a threshold).

In some examples, the user equipment 302 can predict the success durations (308) based on motion sensor data, such as measurements performed by a gyroscope sensor or any sensor capable of measuring the user equipment's 302 orientation and/or acceleration, such as instantaneous acceleration and change of orientation by the user equipment 302. The prediction may use the motion sensor data as part of the input values fed to the predictor. Movement by a user equipment 302 in a cell can change the quality of a beam. In some examples, the user equipment 302 can consider, when predicting the success durations (308), a previous *N* samples of information including the channel quality and motion sensor data. *N* may be a predetermined value. In some examples, the user equipment 302 can consider, when predicting the success durations (308), current motion sensor data and previous sensor data. In some examples, if a current measured angular speed of the user equipment exceeds a threshold angular speed, such as X degrees per second, the user equipment 302 will not predict and/or report a duration.

After predicting the success durations (308), the user equipment 302 can report the predicted durations 310 to the uplink node 304. The predicted durations 310 can include one predicted duration, at least one predicted duration, and/or multiple predicted durations. The user equipment 302 can report, for each beam, a duration 310 for which the user equipment 302 predicts that the channel quality will satisfy the channel quality threshold. The durations 310 can be defined using boundary conditions, such as how long each beam will be considered a "success" or "valid" for communication. In some examples, the beams for which the user equipment 302 reports durations 310 can be considered candidate beams or predicted candidate beams, from which the uplink node 304 can select beams via which the uplink node 304 will communicate with the user equipment 302.

In some examples, the durations 310 reported by the user equipment 302 can include up to *k* beams that satisfy the quality threshold for highest predicted durations. In some examples, the durations 310 reported by the user equipment 302 can include up to *k* beams with highest predicted durations. In some examples, the durations 310 reported by the user equipment 302 can include up to *k* beams that satisfy the quality threshold for a duration threshold. In some examples, the durations 310 reported by the user equipment 302 can include up to *k* beams that satisfy the quality threshold for longest predicted durations. In some examples, the user equipment 302 has received the value *k* from the uplink node 304 and/or the uplink node 304 has sent the value *k* to the user equipment 302.

In some examples, the durations 310 can include identifiers of the beams and signal strength/channel quality, i.e. RSRP, SINR. The durations 310 can be included in messages and/or packets that identify the respective beams and indicate the durations for which the user equipment 302 predicts that the channel qualities of the beams will satisfy the quality threshold. The sending of a message and/or packet by the user equipment 302 that identifies a beam indicates that the user equipment predicts that the identified beam will satisfy the quality threshold for at least some time (e.g. some configured time period). In some examples, if the user equipment 302 does not send a message and/or packet identifying a particular beam, then the user equipment 302 may have predicted that the particular beam will not satisfy the quality threshold, or the particular beam is not within the *k* beams that will satisfy the quality threshold for the longest duration.

In some examples, the user equipment 302 can report, based on predictions by the user equipment 302 of the channel quality for each beam, one or more downlink reference signals based on a first threshold condition and a second threshold condition. In some examples, the first threshold condition can be the duration, such as a threshold duration. In some examples, the second threshold condition can be the channel quality threshold. In some examples, the user equipment 302 can determine the duration per downlink reference signal, with the duration threshold condition being determined to have been satisfied based on the first threshold value (threshold duration), such as a detection threshold with a low channel quality (such as RSRP) value that is sufficient for communication.

In some examples, the user equipment 302 can report, to the uplink node 304, (up to) *k* downlink reference signals which the user equipment 302 predicts will have the longest durations. *k* can be an integer value that the user equipment 302 receives from the uplink node 304.

In some examples, the user equipment 302 can report, to the uplink node 304, *k* downlink reference signals that have highest predicted RSRP predicted RSRP values and have durations that will satisfy the channel quality threshold for at least the threshold duration time. *k* can be an integer value that the user equipment 302 receives (is configured by the uplink node) from the uplink node 304.

In some examples, the user equipment 302 can report, to the uplink node 304, *k* downlink reference signals/beams that satisfy both a first threshold condition (such as the threshold duration) and a second threshold condition (such as satisfying the channel quality threshold for the threshold duration). In some examples, the user equipment 302 can first select downlink reference signals based on satisfying the channel quality threshold such as an RSRP threshold. The user equipment 302 can then rank the downlink reference signals based on durations, ranking the downlink reference signals with longest durations first. In some examples, the user equipment 302 can select from the ranked downlink reference signals a set of downlink signals that correspond to synchronization signal block (SSB) beams, and/or downlink reference signals that correspond to channel state indicator reference signal (CSI-RS) beams (the CSI-RS beams may have been identified by the user equipment based on CSI-RS identifiers and/or CSI sequence numbers).

After receiving the predicted beam durations 310 from the user equipment 302, the uplink node 304 can select beams (312). The selection of the beams (312) can include selecting beams via which the user equipment 302 will communicate with the uplink node 304. The uplink node 304 can select beams (312) for communication with the user equipment 302 from the set of beams for which the user equipment 302 sent and/or reported durations 310 to the uplink node 304. In some examples, the uplink node 304 can select beams (312) that have not already been allocated to, and/or will not be allocated to, other user equipments. In some examples, the uplink node 304 can select the best *k* beams from the beams for which the uplink node 304 received durations 310 from the user equipment 302. The value *k* may be a value determined by the core network 150, and may be based on distributing resources between multiple user devices 131, 132, 133, 135 and/or base stations 134 served by the core network 150. The best *k* beams can be the beams with longest durations, highest predicted quality, or a combination thereof.

In some examples, the uplink node 304 can perform machine learning and predict the channel qualities of the beams, and/or durations for which the beams will satisfy a quality threshold, based on the durations 310 received from the user equipment and/or other data, such as location of the user equipment 302, accelerometer measurements of the user equipment 302, and/or determined motion of the user equipment 302. In some examples, the uplink node 304 can perform further prediction of the channel qualities and/or durations, and select the beams (312) based on the further prediction and/or machine learning.

After selecting the beams (312), the uplink node 304 can allocate beams, such as by sending a beam allocation 314 message to the user equipment 302. The user equipment 302 and the uplink node 304 can communicate via the allocated beams. The uplink node 304 can send the beam allocation 314 to the user equipment 302 via a control channel, according to an example implementation. The user equipment 302 and uplink node 304 can thereafter communicate (316) via the allocated beams.

In some examples, the uplink node 304 can predict the channel qualities of beams and durations that the qualities will satisfy the quality threshold for a user equipment 302. The uplink node 304 can predict the channel qualities based on similar measurements as the user equipment 302, described above. The uplink node 304 can receive the measurements, such as location, accelerometer measurements, and/or orientation measurements, from the user equipment 302. The uplink node 304 can either receive the channel quality measurements for each beam from the user equipment 302 or perform the measurements of the channel quality for each beam.

In some examples, a duration that a quality of a beam, such as a first selected beam, will satisfy a quality threshold can depend on a location of the user equipment 302. In some examples, the user equipment 302 and/or uplink node can predict, based on the user equipment 302 being in a first location and previous channel quality measurements for the first selected beam, a first duration that the first selected beam will satisfy a quality threshold. The user equipment and/or uplink node can determine that the first duration will not satisfy a threshold time duration. Based on the first duration not satisfying the threshold time duration, the duration for the first selected beam will not be reported and/or the first selected beam will not be allocated, and the user equipment 302 and uplink node 304 will not communicate via the first selected beam. After the user equipment 302 has moved to a subsequent location, the user equipment 302 and/or uplink node 304 can predict, based on the subsequent location of the user equipment 302, the previous channel quality measurements for the first selected beam, and/or additional channel quality measurements for the first selected beam, a second duration that the quality of a second selected beam will satisfy the quality threshold. The user equipment 302 and/or uplink node 304 can determine that the second duration satisfies the threshold time duration. Based on the second duration satisfying the threshold time duration, the user equipment 302 can report the second duration for the second selected beam to the uplink node 304, and/or the uplink node 304 can allocate the second selected beam for communication between the user equipment 302 and the uplink node 304. The user equipment 302 and uplink node 304 can thereafter communicate, including the uplink node transmitting data to the user equipment 302, via the second selected beam during the predicted second duration. In some examples, the uplink node 304 can predict the first duration based on a deep reinforcement learning model in which reliability of the first selected beam and/or second selected beam is guaranteed. In some examples, the quality of the first selected beam and/or second selected beam can be determined and/or predicted by the uplink node 304 using a deep reinforcement learning model in which reliability of the first selected beam and/or second selected beam is guaranteed.

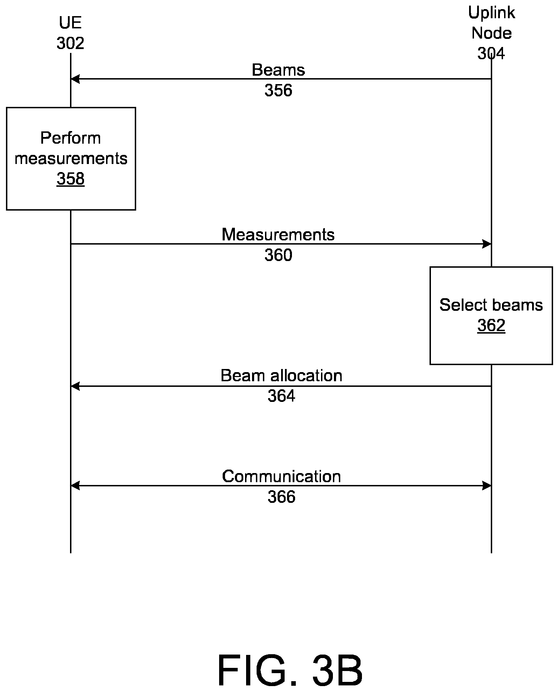

FIG. 3B is another timing diagram showing functions performed by, and messages exchanged between, the user equipment and the uplink node. In this example, the uplink node 304 can predict channel qualities based on measurements performed by the user equipment 302.

The uplink node 304 can send multiple beams 356 to the user equipment 302. The user equipment 302 can receive the multiple beams 356 from the uplink node 304. The multiple beams 356 can have similar features and/or qualities as discussed above with respect to the multiple beams 306.

The user equipment 302 can perform measurements (358). The measurements performed by the user equipment 302 can include measurements of the channel quality of at least one of the beams 356, accelerometer measurements, and/or orientation measurements. The user equipment 302 can perform the measurements (358) periodically, such as every measurement period or reporting period, as discussed above.

The user equipment 302 can send the measurements 360 to the uplink node 304. The user equipment 302 can send the measurements 360 to the uplink node periodically, after performing the measurements (358), on in response to request from the uplink node 304, as non-limiting examples.

The uplink node 304 can select beams (362). The uplink node 304 can select the beams (362) based on predicted success durations. The uplink node 304 can predict the success durations as part of selecting the beams (362). The uplink node 304 can predict the success durations in any manner described above with respect to either the user equipment 302 and/or the uplink node 304. The uplink node 304 can predict the success durations based on the measurements 360 received from the user equipment 302. The uplink node 304 can select the beams (362) via which the user equipment 302 will communicate with the uplink node in a similar manner to (312) described above.

After selecting the beams (362), the uplink node 304 can allocate beams, such as by sending a beam allocation 364 message to the user equipment 302. The beam allocation message 364 can have similar features and/or functionalities as the beam allocation 314 message described above. The user equipment 302 and uplink node 304 can thereafter communicate (366) via the selected beams.

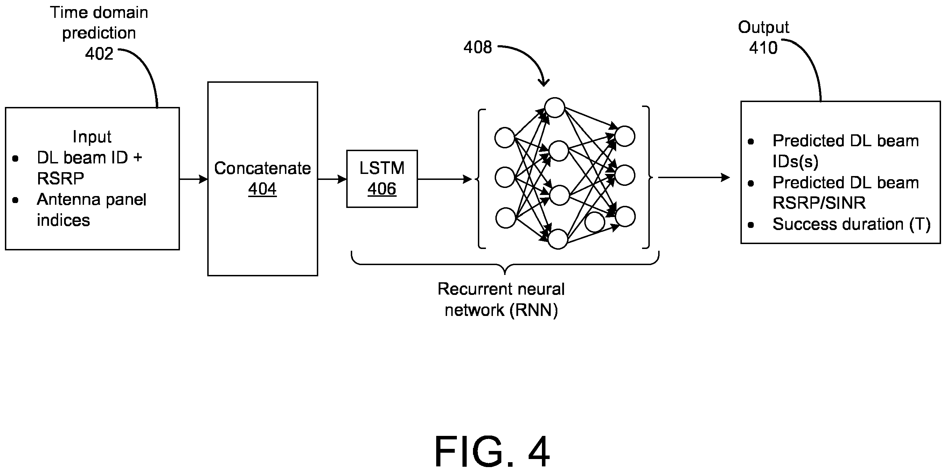

FIG. 4 shows beam prediction at a user equipment 302. The user equipment can predict success durations (308) of beams in a time domain. In some examples, the user equipment 302 can predict the success durations of beams in the time domain by implementing a neural network. In some examples, the neural network can include a long short-term memory (LSTM) recurrent neural network. The LSTM recurrent neural network is a relatively uncomplicated neural network that can be implemented in a mobile device such as the user equipment 302. The output 410 of the beam prediction can include predicted downlink beam identifier(s) (IDs), a predicted RSRP and/or SINR or each identified downlink beam, and/or a success duration (T) for each identified downlink beam. A downlink beam identifier may be used to refer to /identify a downlink beam (e.g. SSB identifier and/or CSI-RS identifier) provided by the network. As an example, the beam identifier may refer to ID value of a beam in a set of beams or all the beams (e.g. SSBs) configured/transmitted by the network. The beam identifier may be used to refer a downlink reference signal resource identifier (e.g. SSB resource indicator and/or CSI-RS resource indicator).

As part of predicting qualities and/or durations of beams in the time domain (402), the user equipment 302 can receive, as input, downlink beam identifiers (DL beam ID) and a channel quality measurement for each identified beam, such as RSRP. The user equipment 302 may have received the downlink beam identifiers from the uplink node 304. The user equipment 302 may have measured the channel quality, such as RSRP, for each beam based on communications with the uplink node 304. In some examples, the user equipment 302 can also receive antenna panel indices. The user equipment can predict channel quality based on antenna panel indices in combination with the orientation of the user equipment 302 with respect to the uplink node 304.

After performing the time domain prediction (402) based on the downlink beam identifiers, channel quality measurements, and/or antenna panel indices, the user equipment 302 can concatenate (404) the time domain prediction. The concatenation (404) can include changing the time domain prediction (402) based on previous time domain predictions (402).

The user equipment 302 can concatenate the beam identifiers (beam IDs) together with RSRP and antenna panel indices and feed into an LSTM recurrent neural network (RNN). The recurrent neural network can include a long short term memory (LSTM) 406 and a network of nodes 408. The long short term memory 406 and network of nodes 408 can predict the sequence output 410 (the output can be in a time sequence such as from time *t, t* + *1, t* + *2,... t* + *N*), including predicted downlink beam identifiers, predicted downlink beam qualities such as RSRP and/or SINR, and/or success durations, based on multiple previous channel qualities, finding patterns in the channel qualities to predict future channel qualities for identified beams.

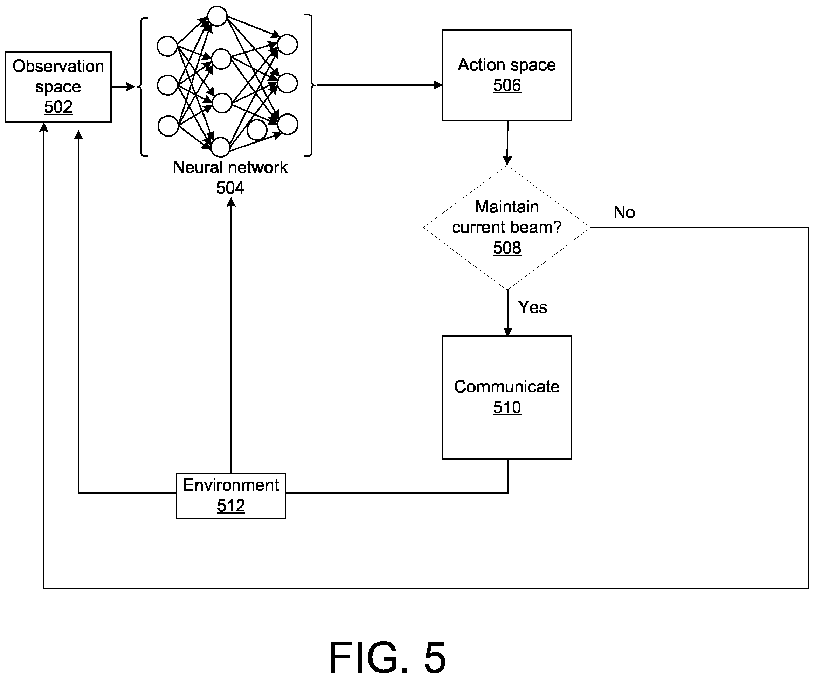

FIG. 5 shows beam prediction at an uplink node 304 based on a measurement report received from the user equipment 302 according to an example. The uplink node 304 can include, for example, a base station 134 such as a gNB.

The beam prediction by the uplink node 304 can begin with an observation space (502). The observation space (502) can include one or more of locations of the user equipment(s) 302 (such as the user devices 131, 132, 133, 135), reported measurement results of downlink beam identifiers received from the user equipment 302, measured channel qualities such as RSRP and/or SINR received from the user equipment 302 (which may have been predicted by the user equipment 302 as described above with respect to FIG. 4), serving beams from a previous sequence, and/or antenna panel indices of the reported downlink beam measurements received from the user equipment 302. In some examples, the observation space (502) can also include beam identifiers and/or channel qualities previously reported by the LTE to the uplink node at (506).

The uplink node 304 can provide the observation space (502) data to a neural network 504. The neural network 504 can generate, based on the observation space (502) data, an action space (506). The action space (506) can include beam predictions such as, within a success duration period *T*, predicted downlink beam identifiers, predicted channel qualities, such as RSRP and/or SINR, associated with the predicted downlink beam identifiers, and/or success durations of the beams. In some examples, the neural network 504 can perform deep reinforcement learning (DRL) to predict up to *k* beams and/or downlink beam identifiers and channel qualities such as RSRP and/or SINR associated with the downlink beam identifiers. The predicted downlink beam identifiers and associated channel qualities can be based on dynamic interactions by the beams and/or user equipments 302 with the environment. The deep reinforcement learning can include rewards within the success time durations *T* predicted by the user equipment 302. Deep reinforcement learning can provide accurate predictions of downlink beam identifiers, channel qualities, and/or success time durations by utilizing the greater computing capacity of the uplink node 304 compared to the computing capacity of the user equipment 302.

After predicting the action space (506), the uplink node 304 can determine whether to maintain the current serving beam (508) or configure a new serving beam. Configuring a new serving beam may refer to configuring a new beam (i.e. a downlink/uplink reference signal used as reference for transmission and/or reception of at least one uplink and/or downlink channel) for at least one of downlink data/control or uplink data/control. Configuring may further refer signaling information (e.g. the indication) of the new beam to the user equipment. The uplink node 304 can determine whether the maintain the current serving beam (508) and/or action space based on whether reliability requirements are met, e.g.,one or more threshold conditions are met. In some examples, the threshold conditions can include a first threshold condition and a second threshold condition. In some examples, the first threshold condition can be the duration, such as a threshold duration. In some examples, the second threshold condition can be the channel quality threshold. In some examples, the uplink node 304 can maintain the current beam if both the predicted duration satisfies the threshold duration and the predicted channel quality satisfies the channel quality threshold. If either the predicted duration does not satisfy the duration threshold or the predicted channel quality does not satisfy the channel quality threshold, then the uplink node will search for the new beam from the observation space (502). After the uplink node 304 searches for the new beam from the observation space (502), the uplink node 304 predicts/selects the new beam identifiers (beam IDs) and/or RSRP of the beam IDs which meet the reliability, e.g., first threshold and second threshold, according to action space (506).

If the uplink node 304 maintains the current beam(s), then the uplink node 304 can communicate (510) with the user equipment 302 via the current beam(s). In some examples, the uplink node 304 can communicate (510) with the user equipment 302 in a similar manner to 316 described above.

While communicating (510) with the user equipment 302 via the current beam(s), the uplink node 304 can perform reward and/or penalty evaluations of the current beam(s). In some examples uplink node 304 can perform reward and/or penalty evaluations of the current beam(s) during the predicted success duration *T*. In some examples, uplink node 304 can perform reward and/or penalty evaluations of the current beam(s) during the predicted success duration *T* based on beam identifier mapping to predicted channel quality, such as RSRP beam identifier mapping to channel quality indicator (CQI) value, SINR beam identifier mapping to CQI value, and/or an RSRP or SINR value mapped to a predicted throughput value and/or data rate. In some examples, the CQI value can indicate a combination of modulation and coding for transmission by a user equipment 302 and/or uplink node 304. Penalties can be applied to the channel quality, such as RSRP value and/or SINR value, associated with a beam identifier if a predetermined number of unsuccessful transmissions and/or receptions are performed via the identified beam. In some examples, the penalties can be applied when the reliability, e.g, the RSRP threshold/SINR (CQI) threshold are not met. Rewards can be applied to the channel quality, such as RSRP and/or SINR value, associated with a beam identifier if a predetermined number of successful transmissions and/or receptions are performed via the identified beam. The uplink node 304 can apply the rewards and/or penalties to the current beam. The uplink node 304 can thereafter combine the rewarded and/or penalized value for the current beam with measured factors of the environment (512), such as interference measurements, and provide these values to update the model/or neural network 504.

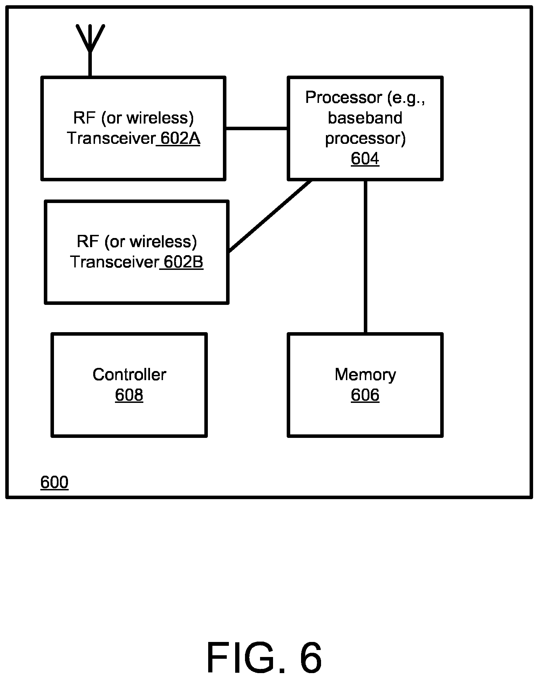

FIG. 6 is a block diagram of a wireless station or node (e.g., LTE, user device, AP, BS, eNB, gNB, RAN node, network node, TRP, or other node) 600 according to an example embodiment. The wireless station 600 may include, for example, one or more (e.g., two as shown in FIG. 6) RF (radio frequency) or wireless transceivers 602A, 602B, where each wireless transceiver includes a transmitter to transmit signals and a receiver to receive signals. The wireless station 600 also includes a processor or control unit/entity (controller) 604 to execute instructions or software and control transmission and receptions of signals, and a memory 606 to store data and/or instructions. The memory 606 can include a non-transitory computer-readable storage medium comprising instructions stored thereon that, when executed by at least one processor 604, are configured to cause the wireless station 600 to perform any combination of methods, functions, and/or techniques described herein.

Processor 604 may also make decisions or determinations, generate frames, packets or messages for transmission, decode received frames or messages for further processing, and other tasks or functions described herein. Processor 604, which may be a baseband processor, for example, may generate messages, packets, frames or other signals for transmission via wireless transceiver 602 (602A or 602B). Processor 604 may control transmission of signals or messages over a wireless network, and may control the reception of signals or messages, etc., via a wireless network (e.g., after being down-converted by wireless transceiver 602, for example). Processor 604 may be programmable and capable of executing software or other instructions stored in memory or on other computer media to perform the various tasks and functions described above, such as one or more of the tasks or methods described above. Processor 604 may be (or may include), for example, hardware, programmable logic, a programmable processor that executes software or firmware, and/or any combination of these. Using other terminology, processor 604 and transceiver 602 together may be considered as a wireless transmitter/receiver system, for example.

In addition, referring to FIG. 6, a controller (or processor) 608 may execute software and instructions, and may provide overall control for the station 600, and may provide control for other systems not shown in FIG. 6, such as controlling input/output devices (e.g., display, keypad), and/or may execute software for one or more applications that may be provided on wireless station 600, such as, for example, an email program, audio/video applications, a word processor, a Voice over IP application, or other application or software.

In addition, a storage medium may be provided that includes stored instructions, which when executed by a controller or processor may result in the processor 604, or other controller or processor, performing one or more of the functions or tasks described above.

According to another example embodiment, RF or wireless transceiver(s) 602A/602B may receive signals or data and/or transmit or send signals or data. Processor 604 (and possibly transceivers 602A/602B) may control the RF or wireless transceiver 602A or 602B to receive, send, broadcast or transmit signals or data.

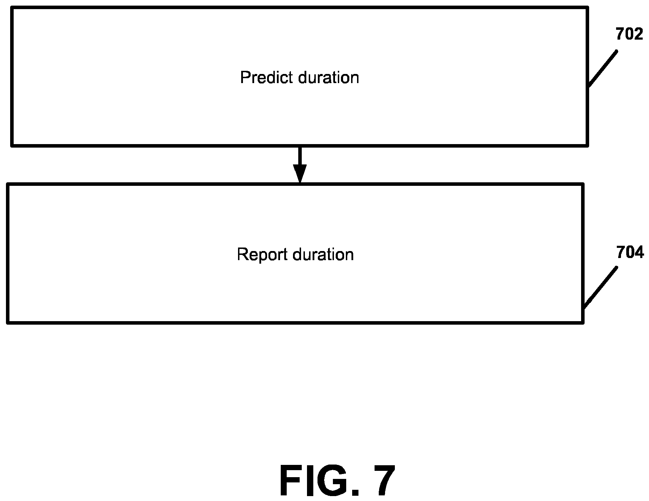

FIG. 7 is a flowchart showing a method performed by the user equipment. The method can include predicting, for at least one beam received from an uplink node, at least one duration for which a channel quality will satisfy a quality threshold (702). The method can include reporting the at least one duration to the uplink node (704).

In some examples, the at least one beam comprises multiple beams, and the at least one duration comprises multiple durations.

In some examples, the method further includes predicting the channel quality for the at least one beam.

In some examples, the at least one beam includes at least one of a set of beams configured by the uplink node, at least one beam associated with downlink control channel reception for the user equipment, at least one beam associated with downlink data channel reception for the user equipment, at least one beam associated with uplink control channel transmission by the user equipment, or at least one beam associated with uplink data channel transmission by the user equipment.

In some examples, the at least one duration is based on at least one of a sequence of previously-measured channel qualities of the at least one beam, a sequence of previous accelerometer measurements of the user equipment, a sequence of previous orientation measurements of the user equipment, a sequence of determined locations of the user equipment, or an antenna configuration of the user equipment.

In some examples, the reporting the at least one duration includes at least one of reporting up to *k* beams that satisfy the quality threshold for highest predicted durations, reporting up to *k* beams that satisfy the quality threshold for a duration threshold, or reporting up to *k* beams that satisfy the quality threshold for longest predicted durations.

In some examples, *k* is a value received from the uplink node.

In some examples, the predicting the durations is performed by at least one of a long short-term memory recurrent neural network implemented by the user equipment or a recurrent neural network implemented by a communication network that includes the uplink node.

In some examples, the channel quality is predicted by a long short-term memory recurrent neural network implemented by the user equipment.

In some examples, the channel quality includes reference signal received power (RSRP).

In some examples, the channel quality includes a signal-to-interference-and-noise ratio (SINR).

In some examples, the prediction is based on information received from the uplink node.

In some examples, the predicting is performed at periodic intervals.

In some examples, the predicting is performed in response to at least one new measurement performed by the user equipment.

In some examples, the predicting is performed in response to a prediction request received from the uplink node.

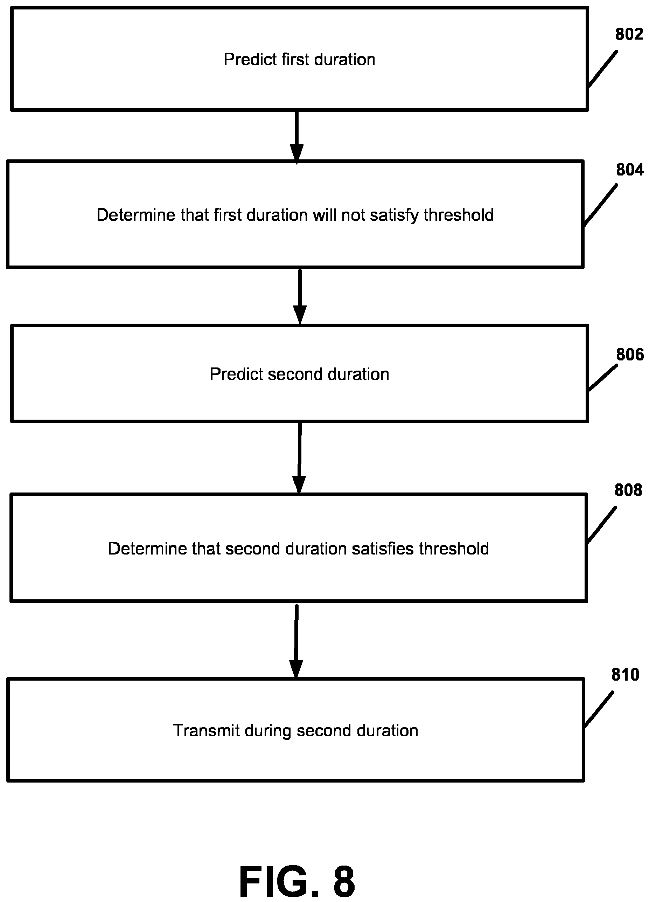

FIG. 8 is a flowchart showing a method performed by an uplink node. The method can include predicting, based on an initial location of a user equipment and previous channel quality measurements, a first duration that a quality of a first selected beam will satisfy a quality threshold (802). The method can include determining that the first duration will not satisfy a threshold time duration (804). The method can include predicting, based on a subsequent location of the user equipment, the previous channel quality measurements, and additional channel quality measurements, a second duration that a quality of a second selected beam will satisfy the quality threshold (806). The method can include determining that the second duration does satisfy the threshold time duration (810). The method can include transmitting data to the user equipment via the second beam during the predicted second duration (810).

In some examples, the first duration is predicted based on a deep reinforcement learning model in which reliability of the first selected beam is guaranteed.

In some examples, the quality of the first beam is determined using a deep reinforcement learning model in which reliability of the first selected beam is guaranteed.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the true spirit of the embodiments of the invention.

## Claims

1. A method performed by a user equipment, the method comprising:
predicting, for at least one beam received from an uplink node, at least one duration for which a channel quality will satisfy a quality threshold; and
reporting the at least one duration to the uplink node.

2. The method of claim 1, wherein:
the at least one beam comprises multiple beams; and
the at least one duration comprises multiple durations.

3. The method of claim 1, further comprising predicting the channel quality for the at least one beam.

4. The method of claim 1, wherein the at least one beam comprises at least one of: a set of beams configured by the uplink node;
at least one beam associated with downlink control channel reception for the user equipment;
at least one beam associated with downlink data channel reception for the user equipment; at least one beam associated with uplink control channel transmission by the user equipment; or
at least one beam associated with uplink data channel transmission by the user equipment.

5. The method of claim 1, wherein the at least one duration is based on at least one of:
a sequence of previously-measured channel qualities of the at least one beam;
a sequence of previous accelerometer measurements of the user equipment;
a sequence of previous orientation measurements of the user equipment;
a sequence of determined locations of the user equipment; or
an antenna configuration of the user equipment.

6. The method of claim 1, wherein the reporting the at least one duration includes at least one of:
reporting up to *k* beams that satisfy the quality threshold for highest predicted durations;
reporting up to *k* beams that satisfy the quality threshold for a duration threshold; or
reporting up to *k* beams that satisfy the quality threshold for longest predicted durations.

7. The method of claim 6, wherein *k* is a value received from the uplink node.

8. The method of claim 1, wherein the predicting the durations is performed by at least one of a long short-term memory recurrent neural network implemented by the user equipment or a recurrent neural network implemented by a communication network that includes the uplink node.

9. The method of claim 1, wherein the channel quality is predicted by a long short-term memory recurrent neural network implemented by the user equipment.

10. The method of claim 1, wherein the channel quality includes at least one of a reference signal received power (RSRP) or a signal-to-interference-and-noise ratio (SINR).

11. The method of claim 1, wherein the predicting is performed at periodic intervals.

12. The method of claim 1, wherein the predicting is performed in response to at least one new measurement performed by the user equipment.

13. The method of claim 1, wherein the predicting is performed in response to a prediction request received from the uplink node.

14. A user equipment comprising means for performing the method of any of claims 1 through 13.

15. An uplink node, comprising:
means for predicting, based on an initial location of a user equipment and previous channel quality measurements, a first duration that a quality of a first selected beam will satisfy a quality threshold;
means for determining that the first duration will not satisfy a threshold time duration; means for predicting, based on a subsequent location of the user equipment, the previous channel quality measurements, and additional channel quality measurements, a second duration that a quality of a second selected beam will satisfy the quality threshold;
means for determining that the second duration does satisfy the threshold time duration; and
means for transmitting data to the user equipment via the second beam during the predicted second duration.
